# DEMANDE DE BREVET EUROPEEN

(11) **EP 2 899 840 A1**
(43) Date de publication de la demande: **29.07.2015**
(21) Numéro de dépôt: 14189150.7
(22) Date de dépôt: 16.10.2014
(51) Int. Cl.: H02J 7/00

(54) **Dispositif d alimentation comprenant un dispositif de délestage**

(30) Priorité: 23.10.2013 FR 1360333
(71) Demandeur: Somfy SAS, 74300 Cluses (FR)
(72) Inventeur: Lambresend, Bruno, 74130 BONNEVILLE (FR)
(74) Mandataire: Verriest, Philippe

(57) **Abrégé**

Dispositif d'alimentation (5) d'un équipement électrique comprenant un élément de stockage (15) et un dispositif de délestage (17) pourvu d'un élément de délestage (23) et d'un circuit intégré (25) comprenant une entrée (29), une sortie (33) et un comparateur (41) apte à émettre un premier signal de commutation pour une valeur de la tension d'entrée (VDD) supérieure à une première valeur et pour émettre un deuxième signal de commutation pour une valeur de la tension d'entrée (VDD) inférieure à une seconde valeur. Le circuit intégré comprend en outre un commutateur (43) agencé pour, selon une première configuration prise à la réception du premier signal, réaliser une liaison de l'entrée (29) reliée à l'élément de stockage (15) à la sortie (33) du reliée à l'élément de délestage (23), et, selon une seconde configuration prise à la réception du second signal, ne pas réaliser ladite liaison.

## Description

La présente invention concerne un dispositif d'alimentation d'un équipement électrique comprenant un élément de stockage et un dispositif de délestage.

Il est connu d'alimenter un élément de stockage par une source d'alimentation électrique pour le charger. Tant que l'élément de stockage n'est pas complément chargé, ce dernier absorbe la puissance électrique et la stocke sous forme d'énergie électrique.

Il est généralement nécessaire de ne pas charger l'élément de stockage au-delà de ses capacités pour éviter une surcharge. Une surcharge se traduit par le dépassement de la tension maximale acceptée aux bornes de l'élément de stockage, ce qui peut engendrer une usure prématurée de ce dernier. C'est le cas tout particulièrement pour les éléments de stockage capacitifs, dont la durée de vie est directement impactée par des pics de surcharge.

A cet effet, il est connu d'utiliser un dispositif de délestage comprenant un élément de délestage agencé pour absorber le surplus d'énergie fournie ou pour être alimenté en courant par l'élément de stockage dans le but de faire diminuer la tension aux bornes de ce dernier.

L'élément de délestage comprend en général une résistance et le dispositif de délestage est pourvu d'un moyen de comparaison de tensions, comme par exemple d'une diode Zener, pour permettre le délestage seulement lorsqu'un seuil de tension limite est dépassé. Le seuil limite correspond à une tension inférieure à la tension maximale acceptée aux bornes de l'élément de stockage. En effet, les tolérances admises concernant les caractéristiques intrinsèques des composants discrets des dispositifs de délestage utilisés obligent à déterminer une marge (10 à 20 %) pour être sûr de ne pas dépasser la tension acceptée.

Ce dispositif de délestage donne satisfaction en ce que la tension maximale acceptée n'est pas dépassée et que l'intégrité de l'élément de stockage est préservée. Toutefois, l'énergie stockée étant fonction du carré de la tension aux bornes de l'élément de stockage, le choix du seuil peut entrainer une diminution de l'énergie stockée.

La présente invention vise à résoudre tout ou partie des inconvénients mentionnés ci-dessus.

A cet effet, la présente invention concerne un dispositif d'alimentation d'un équipement électrique comprenant un élément de stockage et un dispositif de délestage, le dispositif de délestage comportant un élément de délestage et un circuit intégré comprenant une entrée agencée pour être reliée audit élément de stockage et une sortie agencée pour être reliée avec l'élément de délestage.

Le circuit intégré comprend un comparateur agencé pour comparer une valeur d'une tension d'entrée avec au moins un seuil de référence correspondant à un niveau de charge souhaité de l'élément de stockage, le comparateur étant apte à émettre un premier signal de commutation pour une valeur de la tension d'entrée supérieure à une première valeur et pour émettre un deuxième signal de commutation pour une valeur de la tension d'entrée inférieure à une seconde valeur.

Le circuit intégré comprend un commutateur agencé pour, selon une première configuration prise à la réception du premier signal, réaliser une liaison de l'entrée reliée à l'élément de stockage à la sortie reliée à l'élément de délestage, et, selon une seconde configuration prise à la réception du second signal, ne pas réaliser ladite liaison.

En d'autres termes, le dispositif d'alimentation est agencé de manière à réaliser le délestage de l'élément de stockage à travers le circuit intégré.

Le dispositif propose une intégration du commutateur et du comparateur au sein d'une même entité, le circuit intégré.

Le circuit intégré, surveille une valeur analogique, la tension d'entrée, et apporte une réponse numérique, en fournissant un premier ou un second signal numérique, par exemple prenant l'une ou l'autre des deux valeurs binaires. Le passage en première ou en deuxième configuration ainsi que le délestage quant à eux peuvent être considérés comme une réponse analogique apportée par le circuit intégré, la réponse agissant directement sur la valeur de la tension d'entrée.

La première valeur définit l'énergie maximale stockée dans l'élément de stockage. Lorsque l'élément de stockage, raccordé à une source d'alimentation, atteint la première valeur, le commutateur passe de la seconde à la première configuration et l'élément de délestage est raccordé aux bornes de l'élément de stockage.

Cette liaison engendre une décharge de l'élément de stockage dans l'élément de délestage. La tension aux bornes de l'élément de stockage ou tension d'entrée diminuant, le commutateur passe en seconde configuration lorsque la seconde valeur est atteinte. Le choix de la seconde valeur détermine ainsi, conjointement avec les caractéristiques intrinsèques de l'élément de délestage, la fréquence des commutations.

Il apparait donc, qu'avec un choix judicieux du seuil de référence et de la première et de la deuxième valeur associées, pour une résistance de délestage choisie, il est possible de maintenir l'énergie stockée dans l'élément de stockage à un niveau proche de l'énergie maximale stockable sans pénaliser le dispositif dans les périodes où la source d'alimentation électrique n'est plus disponible.

Ainsi, dans le cadre de gammes de tension inférieures à environ 3V, correspondant par exemple à des applications alimentées par un module photovoltaïque de taille réduite, soit inférieur à environ 1600mm2, ou fournissant jusqu'à quelques dizaines de micro-Ampères sous 200 lux, il est possible à la fois :
- de tirer partie de la précision du circuit intégré pour la comparaison de la tension d'entrée au seuil de référence, la dispersion des première et deuxième valeurs d'un circuit intégré à un autre étant faible, et
- de réaliser le délestage de l'élément de stockage à travers le circuit intégré.

Ainsi le dispositif d'alimentation permet une limitation de la charge de l'élément de stockage tout en minimisant le nombre d'interrupteurs et en regroupant les éléments de gestion du délestage au sein du circuit intégré.

Le délestage se caractérise donc par l'activation d'un élément de délestage dans le dispositif d'alimentation, délestant l'énergie fournie à l'élément de stockage et non par un délestage de l'énergie accumulée dans l'élément de stockage.

Selon un aspect de l'invention, la seconde valeur est inférieure à la première valeur, ces deux valeurs étant interdépendantes et liées au seuil de référence.

Selon un aspect de l'invention, le comparateur comprend un amplificateur opérationnel à hystérésis.

Selon un aspect de l'invention, l'amplificateur opérationnel est agencé pour réaliser la comparaison de la valeur de la tension d'entrée avec la première et la deuxième valeur. L'hystérésis définit la différence entre la première valeur et la deuxième valeur.

Selon un aspect de l'invention, le circuit intégré comprend un système d'adaptation agencé pour fournir une image de la valeur de la tension d'entrée pour l'inclure dans une gamme de valeurs de tensions interprétables par le comparateur.

Selon un aspect de l'invention, le système d'adaptation comprend un pont diviseur de tension.

Le comparateur est agencé pour fonctionner dans une gamme de valeurs de tensions définie. L'utilisation d'un pont diviseur de tension permet de former une image de la tension d'entrée, ou tension disponible dans le dispositif de stockage, à surveiller.

Selon un aspect de l'invention, le pont diviseur de tension assure la liaison électrique entre l'entrée et le commutateur.

L'image de la tension d'entrée est prélevée à très haute impédance et est ainsi comparable au seuil de référence dont la valeur est connue et atteinte sans consommation d'énergie excessive. Le circuit intégré est lui-même calibré en correspondance avec le seuil de référence.

Selon une première possibilité, on s'arrange pour choisir un circuit intégré dont les caractéristiques engendrent un seuil de référence le plus proche possible de la tension d'entrée à surveiller.

Alternativement, selon une seconde possibilité, le système d'adaptation peut être réalisé en dehors du circuit intégré par des composants discrets. Dans ce cas le système d'adaptation peut être un pont diviseur ou un autre dispositif équivalent permettant de fournir une image de la tension d'entrée adaptée au seuil de référence disponible.

Selon un aspect de l'invention, l'élément de délestage comprend une résistance.

Le délestage de l'énergie électrique contenue dans l'élément de stockage se fait par dissipation à travers la résistance. Selon un autre aspect de l'invention, comprend une lampe ou une diode électroluminescente. Un composant simple présente notamment l'avantage de limiter les dispersions sur les valeurs de tension et donc de garantir un délestage précis.

Selon un aspect de l'invention, le circuit intégré comprend un générateur de courant agencé pour produire un courant stable indépendamment de la valeur de la tension d'entrée, le générateur de courant étant agencé pour définir la valeur du seuil de référence.

Cette disposition permet de garantir le seuil de référence grâce à une alimentation en courant stable quel que soit la valeur de la tension d'entrée. Le seuil de référence est donc précis et stable.

Selon un aspect de l'invention, l'élément de stockage est un élément capacitif.

La précision du comparateur permet de définir une première valeur légèrement inférieure à la tension maximale aux bornes de l'élément capacitif. Cette disposition permet ainsi de maximiser l'énergie stockée dans l'élément capacitif. En effet, l'énergie stockée dans l'élément capacitif est fonction du carré de la tension d'entrée.

De préférence, l'élément capacitif comprend une supercapacité ou supercondensateur.

La présente invention concerne également un équipement électrique comprenant un élément de génération d'une source d'alimentation électrique à partir d'une source d'énergie externe et un dispositif d'alimentation décrit plus haut, l'équipement électrique étant agencé pour stocker l'énergie en provenance de la source d'alimentation dans l'élément de stockage.

Selon un aspect de l'invention, l'élément de génération comprend un module photovoltaïque.

Selon un aspect de l'invention, l'équipement électrique comprend en outre un dispositif de commande à distance pourvu d'une interface utilisateur et d'un émetteur/récepteur apte à communiquer selon un protocole de communication sans fil, le dispositif de commande à distance étant agencé pour être alimenté par l'élément de stockage.

Dans la mesure où le dispositif d'alimentation comprend une source d'alimentation variable, notamment parce qu'il comprend un panneau photovoltaïque, la protection de l'élément de stockage contre une surcharge se fait en délestant l'énergie fournie par la source dans l'élément de délestage, c'est à dire en redirigeant l'énergie de la source vers l'élément de délestage. La connexion entre la source d'énergie et l'élément de stockage n'est pas coupée. Dans sa seconde configuration, le commutateur réalise donc une liaison supplémentaire, avec l'élément de délestage, dans le dispositif d'alimentation sans isoler électriquement l'élément de stockage. La source d'alimentation reste également connectée au dispositif d'alimentation.

De toute façon l'invention sera bien comprise à l'aide de la description qui suit en référence aux dessins schématiques annexés représentant, à titre d'exemple non limitatif, une forme d'exécution de ce dispositif.

Figure 1 est une vue schématique d'un équipement électrique et d'une source d'énergie externe.

La figure 2 est un schéma électrique contenant les principaux éléments d'un dispositif d'alimentation de l'équipement électrique.

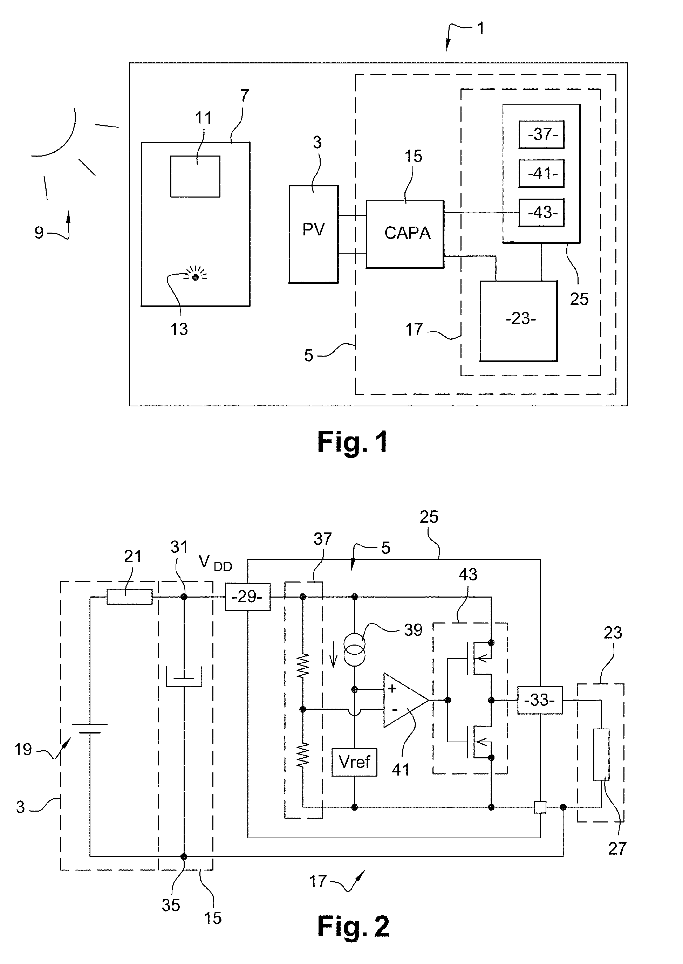

Comme illustré à la figure 1, un équipement électrique 1 destiné à servir de télécommande nomade ou d'interrupteur mural comprend un élément de génération 3 d'une source d'alimentation électrique, un dispositif d'alimentation 5 et un dispositif de commande à distance 7.

L'élément de génération 3 est agencé pour convertir un apport d'énergie externe 9 en une source d'alimentation électrique. Dans le mode de réalisation présenté, la source d'énergie externe est l'énergie lumineuse produite par le soleil et l'élément de génération 3 comprend un module photovoltaïque PV.

Typiquement le module photovoltaïque PV présente une surface de captation d'environ 1600 mm2 et est apte à générer un courant d'environ 20 micro-Ampères sous 200 lux.

L'dispositif de commande à distance 7 comprend une interface utilisateur 11, un émetteur/récepteur 13 agencé pour échanger des données selon un protocole de communication sans fil connu.

Le dispositif d'alimentation 5 est agencé pour alimenter électriquement l'dispositif de commande à distance 7 et comprend un élément de stockage 15 d'énergie électrique et un dispositif de délestage 17.

L'élément de stockage 15 est capacitif et comprend une supercapacité ou supercondensateur CAPA. La tension maximale acceptable aux bornes du supercondensateur CAPA est de l'ordre de 2,5V. De manière générale, il est adapté à des dispositifs d'alimentation 5 dont l'élément capacitif présente une tension maximale acceptable inférieure à 3V.

Comme illustré à la figure 2, Le module photovoltaïque PV est représenté schématiquement par un générateur 19 et un élément résistif 21.

Le dispositif de délestage 17 est agencé pour fournir un moyen de diminution de la tension aux bornes de l'élément de stockage 15, également appelée tension d'entrée VDD. Ainsi, Au cours de la charge, la tension d'entrée VDD augmente et les moyens de diminution de tension sont mis en oeuvre lorsque qu'une tension légèrement inférieure à la tension maximale acceptable par l'élément de stockage 15 est atteinte. La tension d'entrée VDD diminue alors. Les moyens de diminutions sont ensuite déconnectés pour ne pas éliminer trop d'énergie électrique et la charge reprend.

Pour ce faire, le dispositif de délestage 17 comprend un élément de délestage 23 et un circuit intégré 25 agencé pour alternativement mettre en oeuvre les moyens de diminution de la tension et alternativement ne pas les mettre en oeuvre.

Dans le mode de réalisation présenté, l'élément de délestage 23 comprend une résistance 27. Selon des variantes de réalisation, l'élément de délestage 23 peut comprendre une lampe ou une diode électroluminescente.

Le circuit intégré 25 comprend une entrée 29 raccordée à une première borne 31 de l'élément de stockage 15 et une sortie 33 reliée électriquement à l'élément de délestage 23. Le circuit intégré 25 dispose également d'une liaison avec une deuxième borne 35 de l'élément de stockage 15, l'élément de délestage 23 étant également relié à la seconde borne 35.

Le circuit intégré 25 comprend un système d'adaptation 37 agencé pour fournir une image de la tension d'entrée VDD dans une gamme de tension déterminée. Dans le mode de réalisation présenté, le système d'adaptation 37 comprend un pont diviseur de tension, comme illustré à la figure 2.

Selon d'autres modes de réalisation, le système d'adaptation 37 peut être disposé en dehors du circuit intégré 25. Dans ce cas, le système d'adaptation 37 peut comprendre un pont diviseur ou un autre dispositif équivalent permettant de fournir une image de la tension d'entrée adaptée au seuil de référence disponible.

Le circuit intégré 25 comprend en outre un générateur de courant 39 et un comparateur 41. Le générateur de courant 39 est alimenté par l'élément de génération 3 et est apte à engendrer un courant stable indépendamment de la valeur prise par la tension d'entrée VDD. Le comparateur 41 quant à lui, est agencé pour comparer l'image de la tension d'entrée VDD à une valeur aussi appelée seul de référence Vref produite par le générateur de courant 39.

Les caractéristiques du générateur de courant 39, du pont diviseur de tension et du comparateur 41 sont définies pour que l'image de la tension d'entrée VDD, appartenant à la gamme de tension déterminée, soit comparable au seuil de référence Vref par le comparateur 41. Il apparait également que le comparateur 41 possède des caractéristiques lui permettant d'interpréter les valeurs, à très haute impédance, en provenance du pont diviseur et du générateur de courant 39. La très haute impédance du pont diviseur permet notamment de garantir une très faible consommation du dispositif de délestage en fonctionnement nominal du dispositif d'alimentation.

Le comparateur 41 comprend, dans le mode réalisation présenté, un amplificateur opérationnel à hystérésis. Le comparateur 41 est ainsi agencé pour fournir un premier signal de commutation lorsque l'image de la tension d'entrée VDD est supérieure à une première valeur et un deuxième signal de commutation lorsque l'image de la tension d'entrée est inférieure à une seconde valeur.

La première valeur et la deuxième valeur sont définies par la valeur du seuil de référence Vref et par caractéristiques du pont diviseur et du générateur de courant 39, la première valeur et la deuxième valeur étant interdépendantes et liées à l'hystérésis.

Le circuit intégré 25 comprend en outre un commutateur 43 relié au comparateur 41. Selon une première configuration correspondant à la réception du premier signal de commutation en provenance du comparateur 41, le commutateur 43 réalise la liaison de l'entrée 29, liée à l'élément de stockage 15, à la sortie 33, liée à l'élément de délestage 23.

Selon une deuxième configuration correspondant à la réception du second signal de commutation en provenance du comparateur, le commutateur 43 ne réalise pas ladite liaison. Le circuit de délestage est alors ouvert et le module photovoltaïque PV alimente l'élément de stockage.

En observant le dispositif d'alimentation 5 de manière globale, il apparait, que la tension d'entrée VDD peut être considérée comme une valeur analogique. Au contraire unsignal de commutation peut être considéré comme une valeur numérique, car il s'agit d'une valeur binaire (0/1) représentant soit le premier signal de commutation, soit le second signal de commutation. Enfin la réponse apportée par l'adjonction de l'élément de délestage 23 peut être considérée comme une réponse analogique, la conséquence étant la diminution de la tension d'entrée VDD. Ainsi le circuit intégré 25 assure la liaison électrique entre l'élément de stockage 15 et l'élément de délestage 17 selon la première configuration, tout en agissant sur la valeur de la tension d'entrée VDD.

La première valeur équivaut à l'énergie maximale stockée dans l'élément de stockage 15. En effet durant la charge, l'élément de délestage 17 procède à la décharge partielle de l'élément de stockage 15 à partir du moment où la première valeur est atteinte.

La seconde valeur définit, conjointement avec les caractéristiques de l'élément de délestage 23, la fréquence des commutations et la plage de valeurs de tension dans laquelle la tension d'entrée VDD est maintenue.

Les composants du circuit intégré 25, notamment le générateur de courant 39, le comparateur 41, le commutateur 43 et le pont diviseur, présentent des caractéristiques d'une faible dispersion d'un circuit intégré 25 à l'autre. En ce sens, il est possible de définir une première valeur proche de la tension maximale applicable aux bornes de l'élément de stockage 15, le risque de dépasser la tension maximale admissible étant faible.

Cette disposition permet à l'énergie stockée dans l'élément de stockage 15, de se rapprocher de l'énergie maximale stockable. En effet, l'énergie maximale stockable étant fonction du carré de la tension maximale admissible, il apparait que le rapprochement de la première valeur de cette tension maximale admissible permet d'augmenter notablement l'énergie stockée.

Ceci est à comparer avec d'autres systèmes comprenant des composants discrets utilisés pour le délestage de condensateurs, comprenant par exemple une diode Zener et des transistors pour réaliser la connexion avec l'élément de délestage et la commutation.

En effet, le dispositif d'alimentation 5 comprenant le circuit intégré 25 présenté ci-dessus, permet de s'affranchir d'une dispersion des valeurs de déclenchement. En particulier, le circuit intégré offre des tolérances maximales de l'ordre de 0,5 à 2%. L'intérêt est de pouvoir rapprocher la première valeur de la tension maximale acceptable pour la charge de l'élément de stockage 15.

De plus la consommation énergétique globale du circuit intégré 25 est faible par rapport à celle de composants discrets de type diode Zener. Le circuit intégré 25 est moins affecté par les perturbations auxquelles les composants électroniques sont sensibles du fait de sa compacité. En effet, le choix des composants du dispositif de délestage, ceux-ci étant également consommateurs d'énergie pour leur fonctionnement, a un impact important sur l'énergie disponible dans l'élément de stockage. En particulier, pour un dispositif d'alimentation dimensionné au plus juste pour des conditions d'utilisations nominales d'un équipement électrique, le dispositif d'alimentation 5 comprenant le circuit intégré 25 présenté ci-dessus permet d'avoir la capacité de délester l'élément de stockage dans les cas particuliers de conditions de fonctionnement très favorables, comme par exemple un éclairement très favorable à des instants donnés, sans consommer inutilement la plupart du temps dans les conditions nominales (conditions d'un bureau moyennement éclairé par exemple, en tenant compte des alternances jour et nuit).

Les caractéristiques de poids et volume modérés et la durée de vie du dispositif d'alimentation 5 sont également des avantages pour l'alimentation de l'équipement électronique 1 comme la télécommande du mode de réalisation présenté.

Enfin, de tel circuits intégrés 25 comprennent des composants, générateur de courant 39, pont diviseur, comparateur 41, commutateur 43, largement utilisés à grande échelle et donc faciles à intégrer à un équipement électrique 1 courant.

Comme il va de soi, l'invention ne se limite pas à la seule forme d'exécution de ce dispositif d'alimentation, décrit ci-dessus à titre d'exemple, elle en embrasse au contraire toutes les variantes de réalisation.

## Revendications

1. Dispositif d'alimentation (5) d'un équipement électrique (1) comprenant un élément de stockage (15) et un dispositif de délestage (17), le dispositif de délestage (17) comportant un élément de délestage (23) et un circuit intégré (25) comprenant :
- une entrée (29) agencée pour être reliée audit élément de stockage (15),
- une sortie (33) agencée pour être reliée avec l'élément de délestage (23),
- un comparateur (41) agencé pour comparer une valeur d'une tension d'entrée (VDD) avec au moins un seuil de référence (Vref) correspondant à un niveau de charge souhaité de l'élément de stockage (15), le comparateur (41) étant apte à émettre un premier signal de commutation pour une valeur de la tension d'entrée (VDD) supérieure à une première valeur et pour émettre un deuxième signal de commutation pour une valeur de la tension d'entrée (VDD) inférieure à une seconde valeur,
- un commutateur (43) agencé pour, selon une première configuration prise à la réception du premier signal, réaliser une liaison de l'entrée (29) reliée à l'élément de stockage (15) à la sortie (33) reliée à l'élément de délestage (23), et, selon une seconde configuration prise à la réception du second signal, ne pas réaliser ladite liaison.

2. Dispositif d'alimentation (5) selon la revendication 1, dans lequel la seconde valeur est inférieure à la première valeur, ces deux valeurs étant interdépendantes et liées au seuil de référence (Vref).

3. Dispositif d'alimentation (5) selon l'une des revendications précédentes, dans lequel le comparateur (41) comprend un amplificateur opérationnel à hystérésis.

4. Dispositif d'alimentation (5) selon l'une des revendications précédentes, dans lequel le circuit intégré (25) comprend un système d'adaptation (37) agencé pour fournir une image de la valeur de la tension d'entrée (VDD) pour l'inclure dans une gamme de valeurs de tensions interprétables par le comparateur (41).

5. Dispositif d'alimentation (5) selon la revendication précédente, dans lequel le système d'adaptation (37) comprend un pont diviseur de tension.

6. Dispositif d'alimentation (5) selon l'une des revendications précédentes, dans lequel l'élément de délestage (23) comprend une résistance (27).

7. Dispositif d'alimentation (5) selon l'une des revendications précédentes, dans lequel le circuit intégré (25) comprend un générateur de courant (39) agencé pour produire un courant stable indépendamment de la valeur de la tension d'entrée (VDD), le générateur de courant (39) étant agencé pour définir la valeur du seuil de référence (Vref).

8. Dispositif d'alimentation (5) selon l'une des revendications précédentes, dans lequel l'élément de stockage (15) est un élément capacitif.

9. Equipement électrique (1) comprenant un élément de génération (3) d'une source d'alimentation électrique à partir d'une source d'énergie externe (9) et un dispositif d'alimentation (5) selon l'une des revendications précédentes, l'équipement électrique (1) étant agencé pour stocker l'énergie en provenance de la source d'alimentation dans l'élément de stockage (15).

10. Equipement électrique (1) selon la revendication précédente dans lequel l'élément de génération (3) comprend un module photovoltaïque (PV).

11. Equipement électrique (1) selon l'une des revendications 9 ou 10, comprenant en outre un dispositif de commande à distance (7) pourvu d'une interface utilisateur (11) et d'un émetteur/récepteur (13) apte à communiquer selon un protocole de communication sans fil, l'dispositif de commande à distance (7) étant agencé pour être alimenté par l'élément de stockage (15).
